# EUROPEAN PATENT APPLICATION

(11) **EP 0 882 676 A1**
(43) Date of publication of application: **09.12.1998**
(21) Application number: 97909661.7
(22) Date of filing: 29.10.1997
(51) Int. Cl.: C02F 3/08

(54) **SUPPORT SEPARATION SCREEN APPARATUS, METHOD OF AERATION OF SUPPORT SEPARATION SCREEN, AERATION APPARATUS FOR THE METHOD, WASTE LIQUID PROCESSING METHOD AND APPARATUS USING THE SCREEN APPARATUS AND AERATION APPARATUS**

(30) Priority: 29.10.1996 JP 286872/96; 29.10.1996 JP 286873/96; 30.05.1997 JP 142391/97; 19.06.1997 JP 162878/97; 19.06.1997 JP 162879/97
(71) Applicant: NKK CORPORATION, Tokyo 100 (JP)
(72) Inventor: TSUBONE, Toshiaki, NKK Corporation, Tokyo 100 (JP); BABA, Kei, NKK Corporation, Tokyo 100 (JP); SAWADA, Toyoshi, NKK Corporation, Tokyo 100 (JP); TAKECHI, Tatsuo, NKK Corporation, Tokyo 100 (JP); ENDO, Shinichi, NKK Corporation, Tokyo 100 (JP)
(74) Representative: Reinhard - Skuhra - Weise & Partner
(86) International application number: JP9703914
(87) International publication number: WO9818728

(57) **Abstract**

A support separation screen apparatus is used for separating a bacteria fixation support (5) used in an aeration tank (1) for biologically purifying organic and inorganic matters in a waste liquid. A flow straightening body (20) is disposed in the proximity of a support separation screen (7) in a spaced relation and an aeration device (8) is disposed below and in the proximity of the support separation screen in order to reliably prevent clogging of the screen. A method and an apparatus for support separation screen is provided for preventing clogging of the screen by providing an air-diffusing header for air-diffusion at a time-varying diffusion rate and an air-diffusion rate controller for changing the air-diffusion rate with time. Further, a waste liquid processing method and an apparatus is provided for preventing clogging of a screen and allowing the function of a bacteria fixation support to be fully performed by producing a circulation in a tank and by dispersing uniformly a flow into a support separation screen.

## Description

### Field of the Invention

The present invention relates to a carrier separating screen of a waste water treatment utilizing a microbe-attached carrierair-bubble supply method/apparatus for the screen, and a waste water treatment method/facility provided with the apparatus. The invention particularly relates to a carrier separating screen of a waste water treatment facility that utilizes a microbe-attached carrier for a biological purification process of organic and inorganic substances contained in a waste water. The carrier is a particulate that includes a major constituent of an organic polymer substance or an inorganic substance, which holds microbes to effectively purify the waste water. The carrier holds the microbes that may be built-up thereon or attached thereto.

### Background art

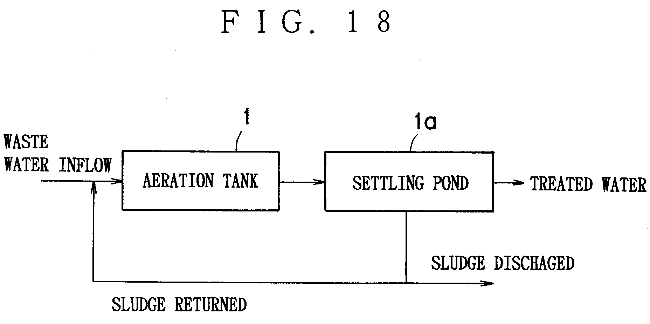

To biologically purify an organic substance or an inorganic substance in a sewage or an industrial waste water, there is a typical standard activated sludge process for treating a waste water, which is shown in FIG. 18. This sludge process is a biological purification process which aerates an inflow water in an aeration tank 1 to deliver it into a final settling pond 1a. The sludge returns into the tank 10.

Meanwhile, another biologically purification process utilizes a microbe-attached carrier in which microbes are built-up or joined together on particulate carriers mainly consisting of an organic polymer substance or an inorganic substances. This purification process applies a so-called carrier added aeration tank that contains microbe-mounted-carriers. The aeration tank may include such effective microbes as BOD removing bacteria as compared with a standard activated sludge process. In the aeration tank, microbes having high growth speed may be used with a high concentration ratio, or microbes having a low growth speed such as a nitration bacteria also with a high concentration ratio may be applied. Such carrier added aeration tanks allow advantageously a compact treatment facility for speeding up the treatment.

Meanwhile, the carrier added aeration tank requires to prevent the added microbe-mounted-carriers from flowing out from the tank. For the purpose, there is provided a carrier separating screen respectively in an outflow side and in an inflow side of the aeration tank. To use the carriers in the aeration tank water, it is required to use a screen having a diameter mesh smaller than the carriers.

In this carrier separating screen, the treated water flows through the screen from an upstream tank to a downstream tank. Hence, an upstream surface of the screen is accumulated by the carriers or other contaminants (like hairs), decreasing the flow passage area for the treated water to disadvantageously reduce the waste water treatment capacity.

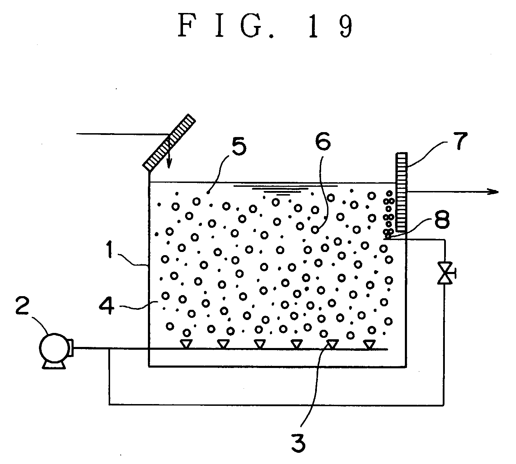

An art for eliminating this disadvantage is disclosed in Japanese Patent Applications Laid-open No. H. 3-38298 and No. H. 6-238290. The arts in the Applications No. H. 3-38298 and H. 6-238290 are called hereinafter respectively as a prior art 1 or a prior art 2, which will be discussed as referring to FIG. 19 and FIG. 20/21.

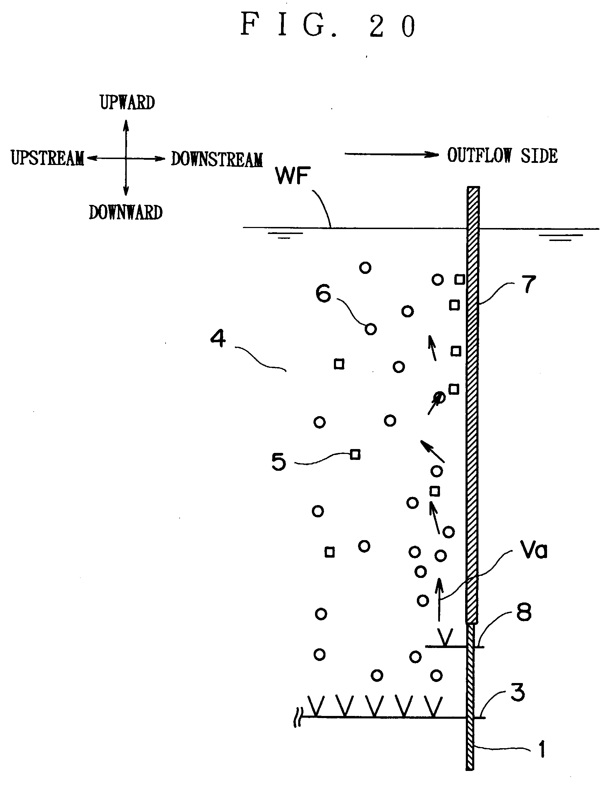

First, referring to FIG. 19 (prior art 1), denoted 1 is an aeration tank: 2 an air blower; and 3 an aeration apparatus. The tank 1 contains a raw waste water 4, which includes microbe-mounted-carriers 5 with a predetermined concentration ratio. The aeration apparatus 3 generates air bubbles 6. The tank 1 has a carrier separating screen 7 at an outflow end thereof. In the prior art 1, an air-bubble supply apparatus 8 is provided close to the screen 7 for preventing the carriers 5 and contaminants (like hairs) included in the waste water from building up on a screen surface of the screen 7. FIG. 20 shows major elements thereof.

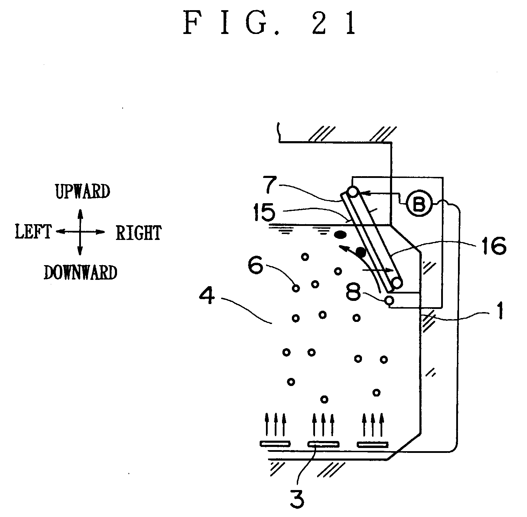

In FIG. 21 (a prior art 2), a carrier separating screen 7 inclines in an upward, left direction along an outflow side configuration of an aeration tank 1. At the rear of (right side) the screen 7, there is provided a chain conveyor 16 in parallel with the screen 7. The conveyor 16 has sprocket wheels looped over by chains. The chains of the conveyor 16 have a brush 15 the tips of which project through openings of the screen 7. Near a lower end of the screen 7, there is provided an air-bubble supply apparatus 8. Thus, the apparatus 8 produces an upward stream along the screen surface, which scratches away contaminants accumulated or clinging on the screen surface so as to return them into the aeration tank 1.

Such biological purification processes, in which a carrier separating screen is essential, have a high treatment capacity as compared with an activated sludge process, since the biological purification process may include high concentration ratio microbes such as nitration bacteria effective in waste water treatment. However, it raises a problem that will be discussed hereinafter.

For preventing the carriers from flowing out from the treatment aeration tank, there is provided a carrier separating screen at an outflow side, as described above, or at each of outflow and inflow sides of the tank. The mesh of the screen is clogged with the carriers and the contaminants like hairs. This increases a permeation resisting coefficient for a water stream so that the water level of the aeration tank abnormally moves upward, restricting the water treatment. In order to prevent the increase of the permeation resisting coefficient, enlagement of the screen is one solution thereof, but it causes an increase in construction cost.

In the prior art 2, without upsizing the screen for preventing the clogging, there is provide the screen unit having the brush for scrubbing off to remove carriers and contaminants accumulated on the screen surface. However, the apparatus that has the extra brush causes a cost increase and also requires a maintenance work thereof. In addition, there is the possibility of causing damage of the carriers by the scrubbing brush.

In the prior art 1, the air-bubble supply apparatus in the waste water treatment facility is simpler and less expensive than the scrubbing brush for removing the depositions. The air-bubble supply apparatus provided close to the screen generates air bubbles, which prevents or falls off the build-up of carriers and contaminants on the screen surface.

Furthermore, there has been another waste water treatment facility having an aeration process tank that contains microbe-mounted-carriers efficiently distributed in the tank for preventing the clogging of a screen. This type of waste water treatment facilities utilizing microbe-mounted-carriers, for example, is disclosed in Japanese Patent Application Laid-open No. H. 5-220491 (called as a prior art 3 hereinafter), H. 7-136679 (a prior art4), or H. 7-124582 (a prior art 5).

Referring to the prior art 3, there is a stream in a process tank, which flows from an upstream side. The stream moves added carriers (treatment pellets) toward a downstream side of the process tank, unevenly distributing the carriers in the tank. This decreases treatment capacity of the tank, and there is the possibility of clogging and blockage due to carriers accumulated on a carrier separating screen. To prevent the uneven distribution due to the stream, it is proposed that an inflow position and an outflow position for a waste water are alternatively changed to alter the stream direction in the tank. This prevents carriers from unevenly distributing in a downstream side, and also prevents the carrier separating screen from clogging.

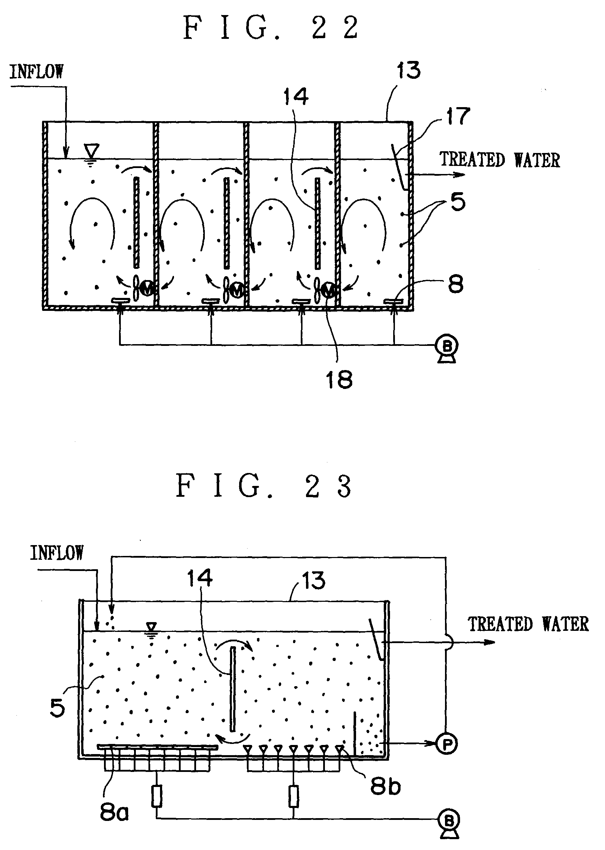

Referring to the prior art 4, as shown in FIG. 22, a treatment tank 13 has a plurality of rooms, each of which includes a baffle plate 14, air-bubble supply apparatus 8, and a activation device such as a propeller mixer 18 provided in a lower part of the room. The room includes added carriers 5 which are moved toward an upstream side by operating the propeller mixer 18. This prevents carriers 5 from unevenly distributing in an outflow part 17, allowing an efficient purification process for sewage.

Referring to the prior art 5, as shown in FIG. 23, a treatment tank 13 has an intermediate baffle plate 14. In the inflow side of the tank, there is disposed an air-bubble supply apparatus 8a that has a lower oxygen dissolution ratio. Meanwhile, in the outflow side of the tank, there is disposed an air-bubble supply apparatus 8b that has a higher oxygen dissolution ratio. Furthermore, the air supply rate of the inflow side is larger than that of the outflow side, thereby generating a circulation flow. The circulation flow containing the distributed carriers 5, allowing an efficient sewage purification process.

### Object of the invention

However, in view of experiments that the inventors of the invention have carried out, the apparatus disclosed in the prior art 1 (Japanese Patent Application Laid-open No. H. 3-38298) can not prevent sufficiently the screen clogging. Particularly, it has been found that a carrier build-up growth tends to occur at a specific position (normally at an upper position) of the screen to cause screen clogging under a steady state of the aeration tank stream by the air-bubble supply.

A blockage of the screen occurs when the carriers are forced to intimately contact with a screen surface, thereby decreasing the flow passage area of the screen. For preventing such blockages of the screen, it is required to eliminate build-up of carriers on the screen surface.

However, the method of the prior art 1 that includes the air bubble generating apparatus provided close to the screen lower end involves a problem that will be discussed hereinafter. That is, referring to FIG. 20, the air-bubble supply apparatus 8 generates air bubbles 6 that moves upward with expanding themselves. This moves a surrounding raw water 4 together, generating an ascending current. A speed Va of the ascending current along the screen 7 is higher near the air-bubble supply apparatus 8, preventing build-up of carriers on the screen. But, the speed Va becomes smaller near a water surface WF, causing build-up of carriers around an upper position of the screen. This raises the problem that build-up of carriers on the screen 7 is not sufficiently eliminated. The deference of the upward moving speeds between upper and lower positions of the screen is caused by that the air bubbles 6 supplied by the apparatus 8 distribute in a wide area of a higher position of the water. Where the aeration tank is of a swirl flow type, there may cause a downward stream close to the screen. Such downward stream decreases an ascending current speed caused by the air bubble generating apparatus, resulted in an undesired current.

The method of the prior art 2 that has the unit for mechanically removing clogging matters on the separating screen. The unit is expensive and causes an increased maintenance cost. In addition, there is the possibility of causing damage of the carriers during removing of the clogging matters.

The prior arts 3 to 5 intend to enhance microbe treatment and to minimize blockage in the carrier separating screen by stirring a water in the aeration process tank. The prior art 3 changes alternatively the inflow and outflow positions of the process tank so as to prevent uneven distribution of carriers in the tank. However, the prior art 3 requires a longer conduit for delivering a waste water, resulted in an increased construction cost. In addition, a valve for altering the inflow and outflow directions is to be frequently operated at predetermined intervals. This raises the risk of a shut down of the system, which could not provide a sufficient designed capability of the system.

The prior art 4 has the baffle plate in the tank and an activation device such as the propeller mixer provided in a lower part of the tank for moving carriers toward the upstream side. However, the baffle plate and the mixer disadvantageously require a large construction cost and also need energy for operating the mixer.

Referring to the prior art 5, in the inflow side of the tank, there is disposed the air-bubble supply apparatus that has a lower oxygen dissolution ratio. Meanwhile, in the outflow side of the tank, there is disposed the air-bubble supply apparatus that has a higher oxygen dissolution ratio. Furthermore, the air supply rate of the inflow side is larger than that of the outflow side, thereby generating a circulation flow. Thus, the baffle plate and the two types of air-bubble supply apparatuses require disadvantageously an outstanding construction cost. In addition, the prior art needs the air-bubble supply apparatus having a lower oxygen dissolution ratio, which raises a problem of an energy expense increase.

In order to solve the above-described problems, an object of the invention is to prevent blockage in a carrier separating screen and to provide a carrier separating screen unit with a low cost for efficiently preventing blockage of a separating screen due to carriers or the like.

Another object of the invention is to provide an air-bubble supply method and an apparatus thereof for positively preventing clogging in a screen utilized in the foregoing carrier separating screen unit so as to prevent blockage of the screen.

A further object of the invention is to improve waste water treatment efficiency and to prevent blockage of a carrier separating screen. That is, the invention aims to provide a waste water treatment method and a facility of the same, which can efficiently distribute microbe-mounted-carriers in a process tank having a simplified means of a low cost for waste water treatment.

### Description of the invention

For achieving the foregoing objects, the invention provides apparatuses that will be discussed hereinafter.

The invention described as claim 1 is a carrier separating screen unit for separating microbe-mounted-carriers that are used in a biological purification process of organic and inorganic substances in a waste water. The unit is characterized in comprising a stream guide member close to and spaced from the carrier separating screen.

This invention includes a stream guide member close to and spaced from the carrier separating screen, defining a flow passage between the screen and the stream guide member. Thereby, air bubbles (generated by an aeration apparatus or an air-bubble supply apparatus) near a lower part of the screen do not widely spread out, but move upward through the flow passage. Thus, the upward flow speed does not decrease between the lower part of the screen and the water surface. That is, the upward stream provides a shearing force all over the screen surface, preventing build-up of carriers or the like on the screen surface. In addition, even where the aeration tank is of a swirl flow type, its descending flow would not give an adverse effect.

The invention described as claim 2 is a carrier separating screen unit as set forth in claim 1. The unit is further characterized in that the screen is mounted in an aeration tank and the stream guide member has a lower end extended near the aeration apparatus provided the aeration tank.

In this invention, the stream guide member having a lower end extended near the aeration apparatus allows that the flow passage defined between the screen and the stream guide member can intake air bubbles generated by an aeration apparatus positioned under the flow passage. This increases an ascending current along the screen surface in speed.

The invention described as claim 3 is a carrier separating screen unit as set forth in claim 1 or 2. The unit is characterized in that an air-bubble supply apparatus is provided under and close to the screen.

In this invention, the air-bubble supply apparatus provided under and close to the carrier separating screen can increase the ascending current speed through the passage defined between the screen and the stream guide member. Because, air bubbles increased by the air-bubble supply apparatus passes through the flow passage.

The invention described as claim 4 is an air-bubble supply method for a carrier separating screen. The method is characterized in supplying air-bubbles in such a way that an air supply rate is varied with time for separating microbe-mounted-carriers in a carrier separating screen.

In this invention, the air supply rate varied with time prevents build-up of carriers or contaminants from concentrating on a specified position of the screen surface. That is, the method varies the position that tends to deposit carriers with time so that accumulated carriers or contaminants do not grow larger. Thus, accumulated carriers or contaminants are easily fell off by the air-bubble supply, preventing clogging in the screen.

The invention described as claim 5 is an air-bubble supply method for a carrier separating screen as set forth in claim 4. The method is characterized in that air-bubbles are supplied from more than one positions close to the screen.

In this invention, air-bubbles supplied from such more than one positions can control better to fall off build-up of carriers or contaminants on the screen surface, effectively preventing clogging in the screen.

The invention described as claim 6 is an air-bubble supply apparatus of a carrier separating screen for separating microbe-mounted-carriers that are used in a biological purification process of organic and inorganic substances in a waste water. The apparatus is characterized in having an air-bubble supply header mounted close to the carrier separating screen and a control means for controlling an air supply rate from the header with time.

In this invention, the control means can control an air supply rate from the header to vary an air-bubble supply with time.

The invention described as claim 7 is an air-bubble supply apparatus as set forth in claim 6. The apparatus is further characterized in having more than one air-bubble supply headers close to the carrier separating screen.

In this invention, the apparatus has more than one air-bubble supply headers close to the screen, which can vary air supply rates from the more than one positions close to the screen with time to supply air-bubbles.

Besides, the air-bubble supply header disposed close to the screen generates air bubbles which produce an effect on the screen surface. The header should be specifically positioned based on the size of the apparatus, the kind of carriers, and the kind of waste water.

The invention described as claim 8 is a waste water treatment method for purifying biologically a waste water. The method is characterized in that for treating an waste water in a process tank containing microbe-mounted-carriers, the process tank has an inflow water descending height and the lateral width substantially perpendicular to the height such that the ratio of the height to the lateral width is between one and four. The inflow water and the carriers in the process tank are stirred by aeration so as to distribute the carriers in the water.

In this invention, when an inflow water is biologically purified, microbe-mounted-carriers are added according to the capacity of the treatment tank. Furthermore, the process tank has the foregoing ratio dimensions. Thus, the microbe-mounted-carriers are evenly distributed, allowing an efficient biological purification process.

The invention described as claim 9 is a waste water treatment for purifying biologically a waste water. The facility is characterized in having a process tank for biologically purifying an inflow water with microbe-mounted-carriers and aeration. Furthermore, the process tank has the flow direction length and the lateral width substantially perpendicular to the length such that the ratio of the length to the lateral width is between one and four.

In this invention, the process tank having the dimensions of the foregoing ratio tends to evenly distribute microbe-mounted-carriers in an inflow water. This allows an efficient biological purification process for the inflow water.

The invention described as claim 10 is a waste water treatment facility as set forth in claim 9. The facility is further characterized in having a partition that determines the ratio of the length to the lateral width of the process tank so as to be a predetermined value. Furthermore, the partition is a screen having a mesh to prevent the carriers from flowing out.

In this invention, the partition screen provided in the process tank can achieve the dimension ratio of a predetermined value, allowing an effective distribution of carriers in the tank water.

As described above, when a waste water is treated in a process tank including carriers, the ratio (L/B) of the flow direction length L to the lateral width B is determined to be a numeric value between 1 (one) and 4 (four), preferably between 1 (one) and 3 (three).

In addition, by applying the invention, an existing process tank could be parted to provide a plurality of process tanks having such a dimension ratio, allowing a satisfactory distribution of carriers. That is, where the water flow direction length L is significantly larger than the lateral width B of the process tank, a partition satisfying the foregoing dimension ratio could effectively distribute carriers in the water by stirring the water by means of aeration (air-bubble supply). The partition may be a screen having a mesh that can prevent the carriers from flowing into another compartment of the process tank.

The invention described as claim 11 is a waste water treatment method that utilizes a treatment apparatus having an aeration tank provided with carriers. The method is characterized in that the aeration tank includes a process tank and a plurality of air-bubble supply apparatuses mounted in the process tank. Furthermore, the air-bubble supply apparatuses vary in air supply rate toward a downstream of the tank upstream side. This can generate a swirl flow in the tank to distribute the carriers in the tank for biologically purifying the waste water.

In this invention, the variation of air supply rate from the air-bubble supply apparatuses toward the downstream side of tank can generate a swirl flow so that carriers can distribute widely in the tank. This enables an effective waste water biological purification process,

The invention described as claim 12 is a waste water treatment method as set forth in the claim 11. The facility is further characterized in that the ratio of the most downstream air-bubble supply apparatus to the most upstream one in air supply rate is adjusted to be a value between 1.1 and 3.0.

In this invention, the ratio of the air supply rate of the most downstream to that of the most upstream side generates a swirl flow in the tank. Meanwhile, where the ratio is less than 1.1, an insufficient swirl flow develops, causing a reduced carrier distribution, and the ratio larger than 3.0 decreases oxygen dissolution into the water. Hence, the ratio between 1.1 and 3.0 is desired.

The invention described as claim 13 is a waste water treatment method that utilizes a treatment apparatus having an aeration tank provided with carriers. The method is characterized in that the aeration tank includes a process tank and a plurality of air-bubble supply apparatuses mounted in the process tank. Furthermore, the air-bubble supply apparatuses vary in air supply rate between the left and right sides of the tank relative to the downstream direction. This can generate a swirl flow substantially perpendicular to the downstream direction in the tank to distribute the carriers in the tank for biologically purifying the waste water.

In this invention, the air supply rate is different between the left and right sides of the tank so as to widely distribute carriers for an effective biological purification process.

The invention described as claim 14 is a waste water treatment method as set forth in the claim 13. The method is further characterized in that the ratio of the right side to the left side or of the left side to the right side of the aeration tank is adjusted to be a value between 1.1 and 3.0. The ratio of the right and left sides of the tank in air supply rate enables the swirl flow with ease.

The invention described as claim 15 is a waste water treatment method that utilizes a treatment apparatus having an aeration tank provided with carriers. The method is characterized in that the aeration tank includes a process tank and a plurality of air-bubble supply apparatuses mounted in the process tank. Furthermore, the air-bubble supply apparatuses vary in installation intervals toward the downstream of the aeration tank. The air-bubble supply apparatuses provide air-bubbles to generate a swirl flow in the tank to distribute carriers in the tank for biologically purifying the waste water.

In this invention, The adjustment of the air-bubble supply apparatuses in the installation intervals allows to generate a swirl flow so as to widely distribute microbe-mounted-carriers for an efficient biological purification process.

The invention described as claim 16 is a waste water treatment facility that utilizes a treatment apparatus having an aeration tank provided with carriers. The facility is characterized in that the aeration tank includes a process tank and a plurality of air-bubble supply apparatuses mounted in the process tank. Furthermore, the facility has an adjustment means that varies the air-bubble supply apparatuses in air supply rate toward the downstream of the tank.

In this invention, the adjustment means adjusts each air-bubble supply apparatus in air supply rate to widely distribute carriers in the tank for an effective biological purification process.

The invention described as claim 17 is a waste water treatment facility that utilizes a treatment apparatus having an aeration tank provided with carriers. The facility is characterized in that the aeration tank includes a process tank and a plurality of air-bubble supply apparatuses mounted in the process tank in a direction substantially perpendicular to the downstream direction. Furthermore, for adjusting the air supply rate between the left and right sides of the aeration tank, the facility has one or more of orifice adjustment devices that are provided in air tubes included in the air-bubble supply apparatuses.

In this invention, each air-bubble supply apparatus has an orifice adjustment device for adjusting the air supply rate between the left and right modes of the tank to produce a swirl flow in a direction perpendicular to the water downstream direction. This enables to widely distribute carriers in the tank.

The invention described as claim 18 is a waste water treatment method that utilizes an aeration tank including microbe mounted carriers. The method is characterized in that the tank consists of one compartment or a plurality of compartments parted by such a partition as a carrier separating screen, Furthermore, a carrier separating screen is mounted close to an outflow part of the tank, and air bubble generating apparatus is installed just under or close to the partition. This configuration generates air bubbles in the tank to produce a swirl flow for distributing the carriers in the tank.

In this invention, the aeration tank having a carrier separating screen is mounted with an air bubble generating apparatus below the screen. This produces an ascending flow to take off carriers that tend to deposit on the screen and prevents a short circulation flow in the outflow part of tank, generating a swirl flow in the tank to distribute the carriers for a biological purification process.

The invention described as claim 19 is a waste water treatment method as set forth in the claim 18. The method is further characterized in operating continuously or intermittently the air bubble generating apparatus to generate a swirl flow in the aeration tank so as to distribute the carriers in the tank.

In the invention, the air bubble generating apparatus operates continuously or intermittently to take off carriers accumulated on the screen so as to distribute the carriers in the water contained in the tank.

The invention described as claim 20 is a waste water treatment facility that utilizes an aeration tank including microbe mounted carriers. The facility is characterized in that the tank consists of one compartment or a plurality of compartments parted by such a partition as a carrier separating screen. Furthermore, another carrier separating screen is disposed close to an outflow part of the tank, and a specific air bubble generating apparatus is installed just under or close to the partition.

In this invention, the aeration tank having carrier separating screen is mounted with an air bubble apparatus positioned just under or close to the screen. This enables a stream to take off carriers that tend to build up on the screen so as to distribute carriers for a biological purification process. The partition screen for longitudinally parting the aeration tank prevents the carriers from unevenly distributing toward the outflow side of the tank.

### Brief Description of Accompanied Drawings

FIG. 1 is a sectional view of an embodiment 1 of a carrier separating screen unit according to the invention.

FIG. 2 is a sectional view of an embodiment 2 of a carrier separating screen unit according to the invention.

FIG. 3 is a sectional view of another embodiment 2 of a carrier separating screen unit according to the invention.

FIG. 4 is a perspective view of an embodiment 3 of a carrier separating screen unit according to the invention.

FIG. 5 is a sectional view of an embodiment 4 of a carrier separating screen unit according to the invention.

FIG. 6 is a sectional view of an embodiment 5 of a carrier separating screen unit according to the invention.

FIG. 7 shows schematic illustrations showing build-up states of carrier or contaminants on a screen surface when an air supply rate varies with time.

FIG. 8 shows schematic illustrations showing build-up states of carrier or contaminants on a screen surface when an air supply rate is constant.

FIG. 9 is a graph showing a water level difference across a separating screen, which varies with time.

FIG. 10(a) shows an embodiment 6 of an aeration tank applied to a waste water treatment facility according to the invention, FIG. 10(b) shows a plan view thereof, and FIG. 10(c) shows an alternative example of the aeration tank.

FIG. 11 is a schematic side view of an embodiment 7 of an aeration tank applied to a waste water treatment facility according to the invention.

FIG. 12(a) is a schematic side view of an embodiment 8 of an aeration tank applied to a waste water treatment facility according to the invention, and FIG. 12((b) is a plan view thereof.

FIG. 13(a) is a schematic side view of an embodiment 9 of an aeration tank applied to a waste water treatment facility according to the invention, and FIG. 13(b) is a plan view thereof.

FIG. 14(a) is a schematic side view of another embodiment 9 of an aeration tank applied to a waste water treatment facility according to the invention, and FIG. 14(b) is a plan view thereof.

FIG. 15(a) is a schematic side view of an embodiment 10 of an aeration tank applied to a waste water treatment facility according to the invention, and FIG. 15(b) is a plan view thereof.

FIG. 16(a) is a schematic side view of an embodiment 11 of an aeration tank applied to a waste water treatment facility according to the invention, and FIG. 16(b) is a plan view thereof.

FIG. 17(a) is a schematic plan view of an embodiment 12 of an aeration tank applied to a waste water treatment facility according to the invention, and FIG. 17(b) is a side view thereof.

FIG. 18 shows a flow diagram of a known standard activated sludge process.

FIG. 19 is a schematic sectional view of a known waste water treatment facility.

FIG. 20 is a schematic sectional view of a known waste water treatment facility.

FIG. 21 is a schematic sectional view of a known waste water treatment facility.

FIG. 22 is a schematic sectional view of a known waste water treatment facility.

FIG. 23 is a schematic sectional view of a known waste water treatment facility.

### Detailed Description of the Preferred Embodiments

Referring to the accompanied drawings, a plurality of embodiments of the invention will be discussed hereinafter.

Concerning the embodiments, there will be discussed a carrier separating screen unit used in a waste water treatment tank such as an aeration tank and a process tank, an air-bubble supply method/apparatus applied to the screen, and a waste water treatment method/facility thereof.

### (Embodiment 1)

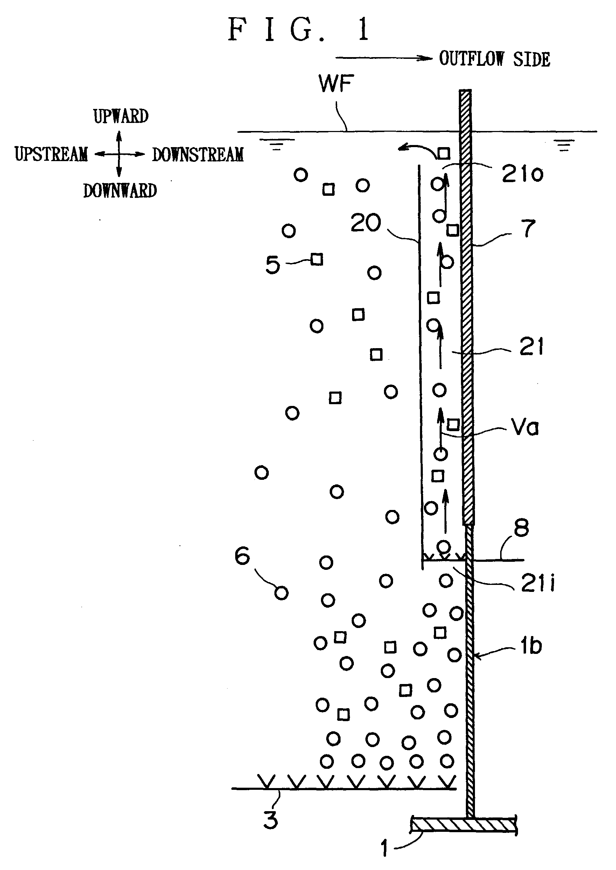

FIG. 1 is a sectional view showing an embodiment 1 of a carrier separating screen unit according to the invention. In the Figure, denoted 1 is an aeration tank; 1b a downstream side tank wall of the tank 1; 7 a carrier separating screen provided over a treating water outflow opening formed in an upper portion of the wall 1b; and 3 an aeration apparatus on a bottom side of the tank 1. In this embodiment, there is provided a stream guide member 20 close to and upstream of the carrier separating screen 7 (hereinafter called as the screen). The guide member 20 is fixed with a support means (not shown) in the aeration tank in such a way that the member extends parallel to and with a given space from the screen 7. The guide member 20 has an area to cover a screen 7 across the over-all width and across a height between the lower end and a position of a given depth from a water surface WF. Thus, provision of the guide member 20 defines a flow passage between the screen 7 and the guide member 20. The aeration apparatus 3 located below the flow passage supplies air-bubbles 6 which enter into the flow passage 21 to move upward through the flow passage 21 to its outlet opening 21o without spreading in different directions. The upward movement of the air bubbles 6 in the flow passage 21 provides an ascending current having a speed Va along the stream guide member 20, preventing carriers 5 or the like from building up on a screen face. Thereby, the carriers 5 or the like return to an upstream side of the aeration tank from the outlet opening 21o of the flow passage 21.

In addition, where the air bubble aeration apparatus 3 can not provide a sufficient stream speed V in the flow passage 21, another air-bubble supply apparatus 8 should be disposed near an inlet opening 21i of the flow passage to generate additional air bubbles.

The stream guide member 20 may be made of concrete, metal, plastic, or the like, and may be in a plate shape or a channel having each side portion bent toward the downstream side of the tank.

### (Embodiment 2)

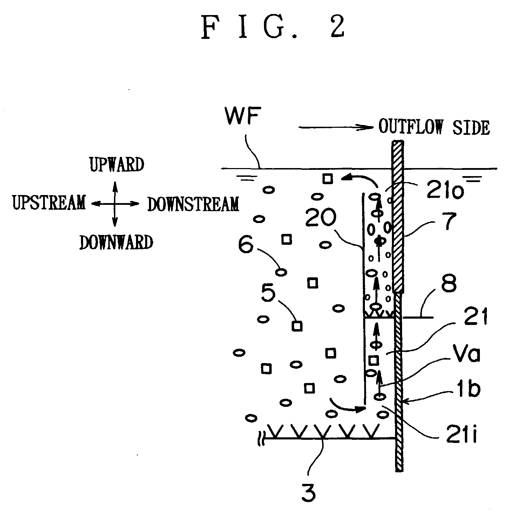

FIG. 2 is a sectional view showing an embodiment 2 of a carrier separating screen unit according to the invention. This embodiment is different from the embodiment 1 only in that the stream guide member 20 extends to reach near the aeration apparatus 3. The other configurations that are the same as the embodiment 1 will not be discussed again. The embodiment 2 can intake air bubbles 6 just generated by the aeration apparatus 3 into the flow passage 21. That is, the generated air bubbles 6 enter the flow passage 21 before spreading in different directions. A lower end of the guide member may be formed in a divergent shape to intake more air bubbles generated by the aeration apparatus. Hence, more air bubbles than the embodiment 1 flow into the passage 21, which produces an ascending current having a greater speed Va. As in the embodiment 1, where the air bubble aeration apparatus 3 can not provide a sufficient stream speed Va in the flow passage 21, another air-bubble supply apparatus 8 should be disposed in the flow passage 21 to generate additional air bubbles.

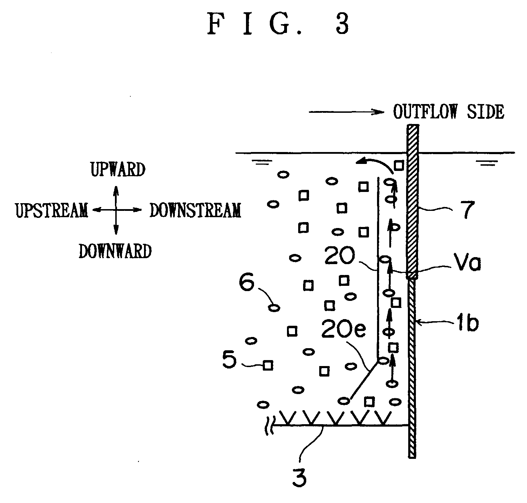

FIG. 3 is a sectional view showing another embodiment 2 of the unit according to the invention, in which the stream guide member 20 has an inclined lower portion 20e divergent toward the bottom of the tank. This can feed more air bubbles 6 into the flow passage 21 from the aeration apparatus 3.

### (Embodiment 3)

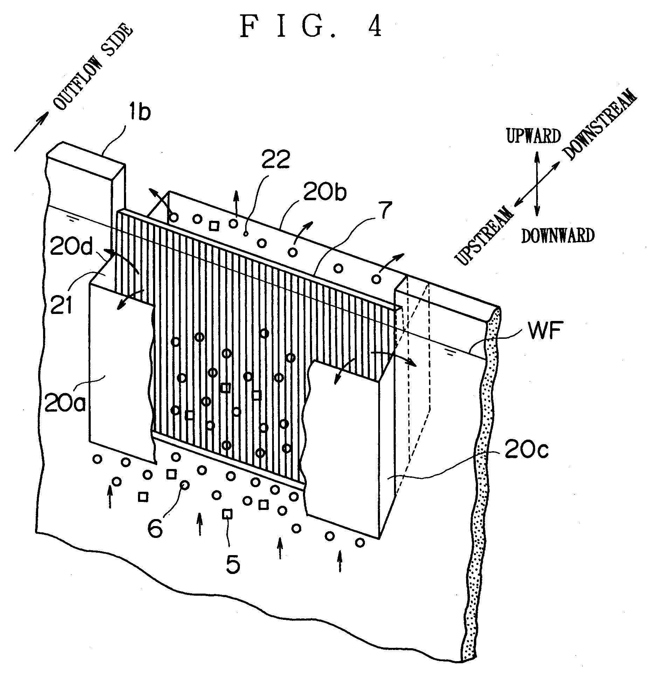

FIG. 4 is a perspective view of an embodiment 3 of a carrier separating screen unit according to the invention. This configuration has a stream guide member 20a in an upstream side of the screen 7 and a stream guide member 20b in a downstream side of the screen. Between the guide members 20a and 20b there are provided side plates 20c and 20d to define flow passages 21 and 22 respectively in an upstream or downstream side of the screen 7. This produces an ascending current each in the upstream and downstream sides of the screen 7, more effectively preventing build-up of carriers or the like on the screen 7.

### (Embodiment 4)

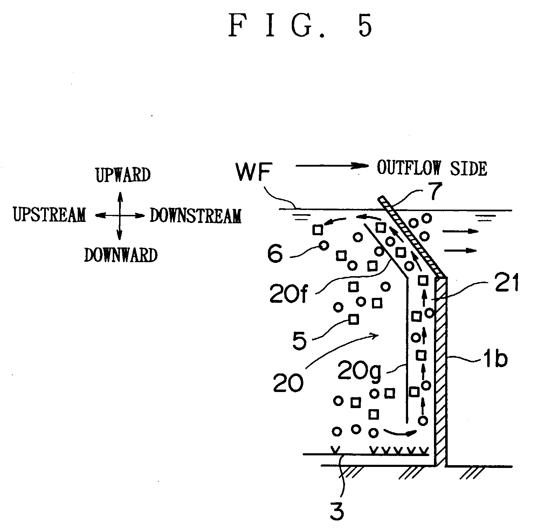

FIG. 5 is a sectional view of an embodiment 4 of a carrier separating screen unit according to the invention. This configuration includes a screen 7 provided in an upper portion of a downstream wall 1b of the aeration tank. The screen 7 inclines toward the upstream of the tank. Furthermore, there is disposed a stream guide member 20 in the tank, which consists of a vertical part 20g along the tank wall 1b and a slanting part 20f along the inclined screen 7. Thus, a flow passage 21 defined therebetween turns toward the upstream of the tank in its upper part.

### (Embodiment 5)

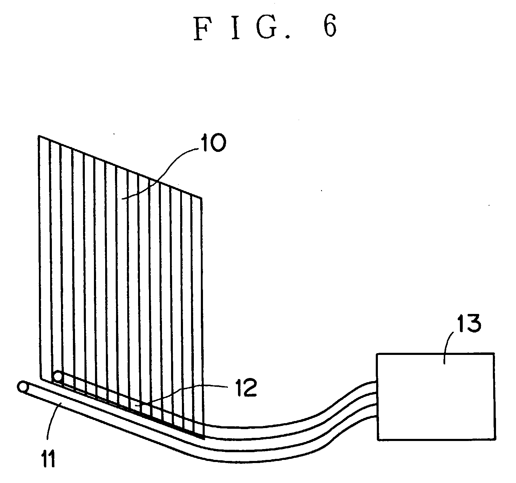

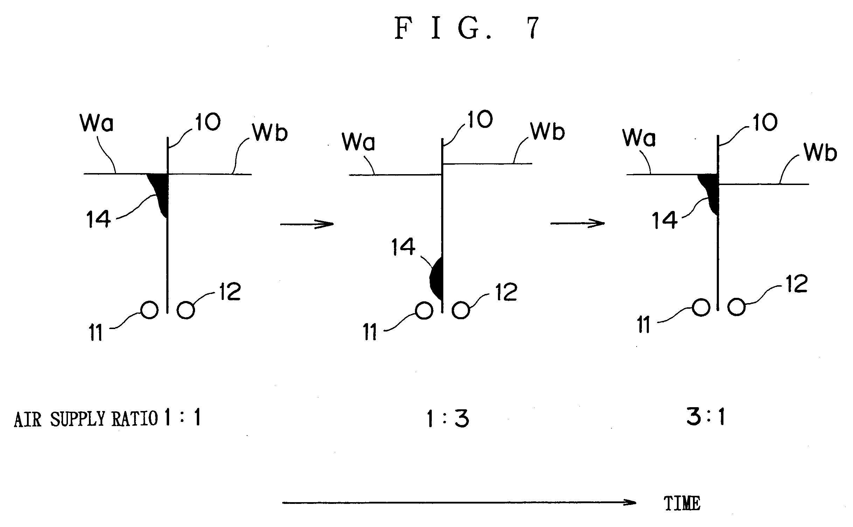

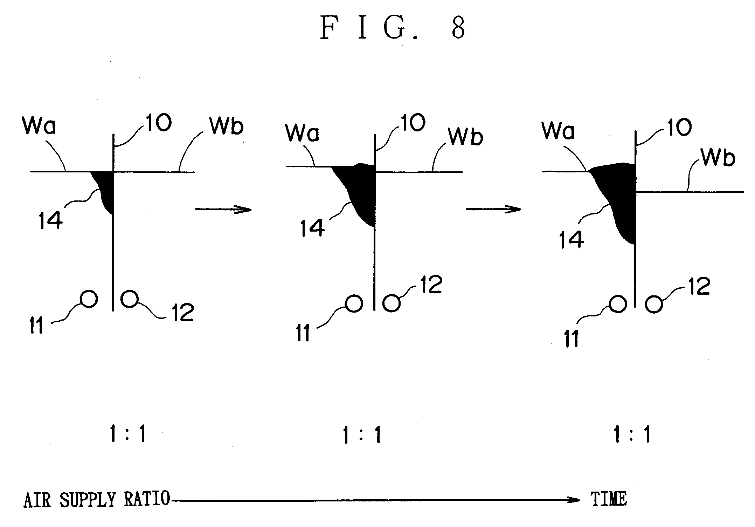

FIG. 6 shows an embodiment of an air-bubble supply apparatus for a carrier separating screen according to the invention. In FIG. 6, denoted 10 is a screen; 11 an air-bubble supply header disposed in the screen front side; 12 a complimentary air-bubble supply header disposed in the screen rear side; and 13 a controller for adjusting air supply rate with time. In FIGS 7 and 8, the same numerals show the same components as ones in FIG. 6.

The air-bubble supply apparatus for the carrier separating screen includes a couple of air-bubble supply headers located near a lower part of the screen 10 and respectively on each side of the screen. One is the header 11, and the other is the header 12. Each header communicates with the controller 13 so as to adjust air supply rate with time, The controller 13 consists of, for example, a CPU (central processing unit) and a storage memory.

To know a with-time build-up change of carriers or contaminants on the screen face, in an operation of the air-bubble supply, the ratio of the front header 11 to the rear header 12 in air supply rate was varied with time in such a way that the ratio sequentially becomes 1:1, 1:3, and 3:1. In another comparative operation of the apparatus, the constant ratio of 1:1 was maintained with time. FIG. 7 is a schematic illustration showing build-up states of carriers or contaminants on the screen face when the air supply ratio was varied with time as described above. FIG. 8 is a schematic illustration showing build-up states of carriers or contaminants on the screen face when the air supply ratio was constant as described above.

In FIGS. 7 and 8, denoted 14 is a build-up of carriers or contaminants; Wa a screen front side water level; and Wb a screen rear side water level.

Varying the air supply rate with time between the front and rear sides of the screens 10 prevents carriers and contaminants 14 from building up on a specific part of the screen 10. This allows build-up and falling thereof alternatively, positively preventing clogging of the screen. Moreover, the difference between the fore side water level Wa and the rear side water level Wb is comparatively small. Meanwhile, when the air supply rate keeps constant, the build-up of carriers and contaminants 14 at a specific part of the screen face 10 grows with time to become comparatively larger, causing clogging of the screen 10. Moreover, the difference between the fore side water level Wa and the rear side water level Wb becomes too large to be capable of the water treatment.

In the embodiment of FIG. 6, there is provided a couple of air-bubble supply headers near a lower part of the screen respectively in each side of the screen. A plurality of air-bubble supply headers may be provided in a vertical or horizontal direction of the screen.

The air supply rate controller may be a flow control valve for adjusting air flow rate with time, and may be a valve adjustable in flow sectional area with time and provided in a pipe line communicating with an air-bubble supply header.

### (A specific embodiment 5)

A specified embodiment 5 utilizes microbe-mounted-carriers each of which consists of a polypropylene, hollow cylindrical one. The carrier has a 4 mm outer diameter, a 3 mm inner diameter, and a 5 mm length, the specific gravity of which is 1.015. The carriers are contained with a 10% filling ratio (apparent volume ratio) in a microbe process tank. There is disposed such a carrier separating screen as shown in FIG. 6. The screen is a wedge-wire screen of a 1.5 mm mesh, and has a 1m width and a depth in water of 1.5 m. The air-bubble supply header composed of a 25 mm diameter pipe having a plurality of 1 mm diameter ports formed at 5 cm intervals, which feeds a tap water to the screen side. The air supply rate of the screen fore side air-bubble supply header varies sequentially into 30 L/min (liter every minute), 15 L/min, and 45 L/min at the intervals of 30 seconds in cycles. At the same time, the rate of the screen aft side air-bubble supply header varies sequentially into 30 L/min, 45 L/min, and 15 L/min at the intervals of 30 seconds in cycles. The with-time variation of the water level difference across the screen was monitored.

For obtaining a comparative data, a similar observation was carried out in a case that a constant air supply rate of 30 L/min is applied to both the air-bubble supply headers across the screen.

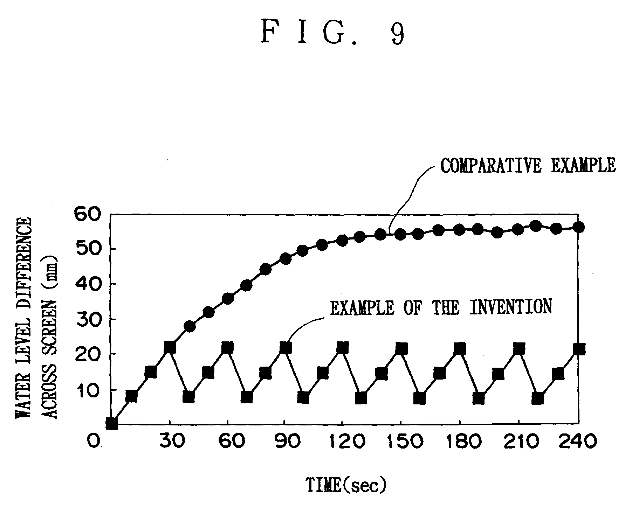

FIG. 9 shows with-time variations of the water level difference across the screen.

As shown in the graphs of FIG. 9, where the air supply rates of the two headers were varied as described above, every air supply rate change could fall off accumulated carriers and contaminants on the screen face, preventing a significant increase in the water permeation resisting coefficient. This maintains a with-time small variation in the water level difference across the screen.

Meanwhile, in the comparative data, the with-time constant air supply rate grew the build-up on the screen into a comparatively large one, which causes a significant increase in the water permeation resisting coefficient of the screen. This increases the water level difference across the screen, resulting in a state unable of water treatment.

### (Embodiment 6)

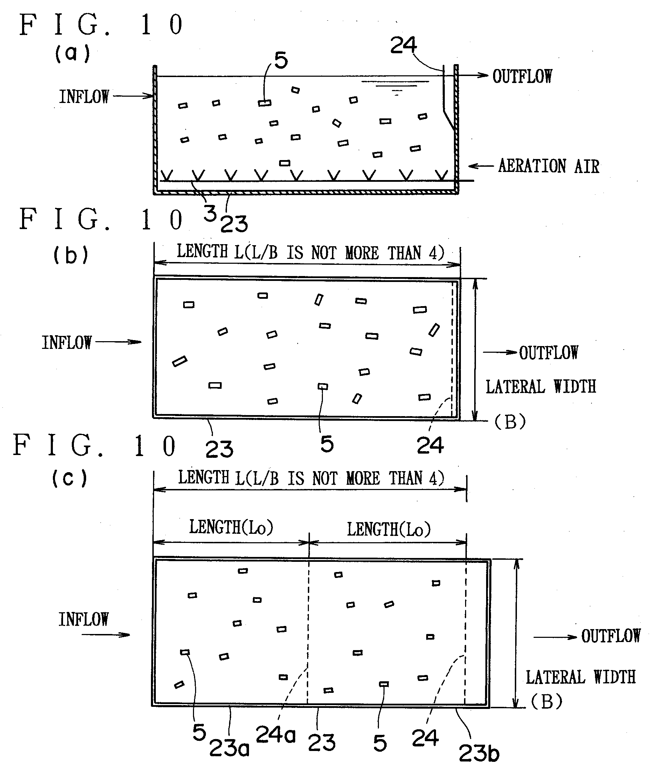

Next, referring to further drawings, a waste water treatment method/facility of an embodiment according to the invention will be discussed. FIG. 10 shows an embodiment of a waste water treatment facility according to the invention, FIG. 10(a) is a side view, and FIG. 10(b) is a plan view thereof. The waste water treatment facility has a process tank 23 that includes an aeration apparatus 3 mounted on the bottom of the tank 23 as providing an aerobic tank. Furthermore, there is disposed a screen 24 at an outlet opening for a processed water. The process tank 23 includes microbe-mounted-carriers 5 of a quantity corresponding to the capacity of the process tank 23. The process tank 23, as shown in FIG. 10(b), has an aspect ratio between 1 and 4. The ratio being of a length L to a lateral width B substantially perpendicular to the inflow direction. The ratio around 1 (one) is best, and practically, it is preferable to select a ratio between 1 and 3.

The water in the process tank 23 flows only toward the outflow side, a flow speed around the outflow end of the tank being approximately between 0.3 and 0.7 cm/sec. If there is provided no aeration in the inflow side of the tank, a waste water inflow would cause a downstream direction current between 0.3 and 2.0 cm/sec. This current may distribute carriers unevenly in the tank, the more of the carriers being gathered around a lower part of the screen. Meanwhile, in this embodiment, an inflow water encounters air bubbles generated by the bottom aeration apparatus 3, which weakens the downstream direction current. In addition, the carriers 5 are blown up toward the water surface of the process tank 23. The carriers 5 keeps substantially an even distribution. The process tank 23 contains the carriers 5 having a specific gravity around 1.01, which are floating and evenly distributing in the water. The even distribution of the carriers 5 in the tank 23 enhances that such microbes as an aerobic bacteria carried by the carrier 5 decomposes organic substances in the waste water to purify the water. Then, the purified water is delivered into a final settling tank. The carrier 5 is a particulate carrier that consists mainly of an organic polymer substance or an inorganic substance. The carrier holds effective waste water purification microbes built up thereon or attached thereto. The carrier 5 may be, for example, a plastic piece or a flexible one made of such a material as sponge.

The screen 24 has a mesh that can prevent microbe the carriers 5 from flowing therethrough. The front side of the screen 24 receives an effect of the aeration, air bubbles of which scratches off the carriers 5 that tend to build up on the screen 24. In addition, the even distribution of microbe-attached carrier5 in the tank enhances to prevent the carriers from building up on the screen 24, resulted in little clogging of the screen. The screen 24 applied in this embodiment acts more effectively.

FIG. 10(c) shows a plan view showing another embodiment 6 of a waste water treatment facility according to the invention. In the figure, a process tank 23 is an aeration tank having an aeration apparatus at the bottom thereof. The process tank 23 is separated by screens 24 and 24a that have mesh openings capable of preventing carriers 5 from flowing out, which defines process tanks 23a and 23b. The process tank 23 has dimensions in which the ratio of the length L to the lateral width B is not more than 4. Moreover, in each process tank 23a or 23b, the ratio of the length Lo to the lateral width B is also not more than 4. When an uneven distribution of the carriers 5 occurs in the process tank 23, provision of the screen 24a defines the separated process tanks 23a, 23b. The carriers 5 substantially equally added for each process tank can evenly distribute in each tank so that microbes for waste water purification decompose organic substances in the waste water. The screen 24 acts more effectively in this embodiment.

### (Embodiment 7)

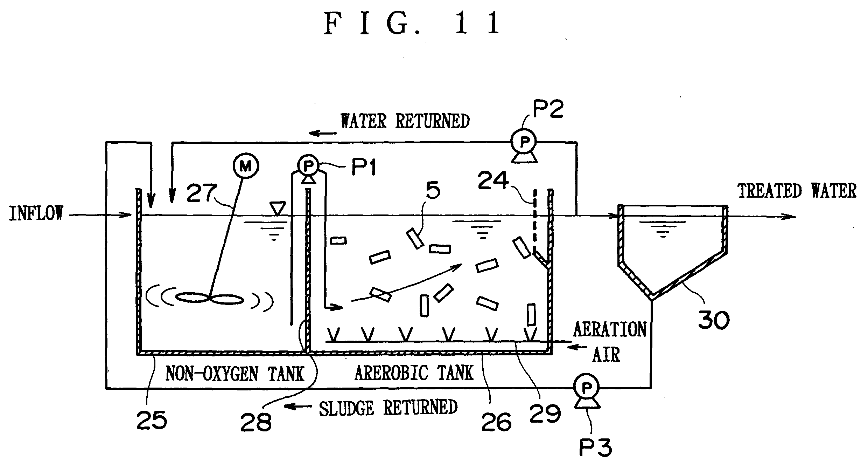

FIG. 11 is a sectional view showing an embodiment of a waste water treatment facility according to the invention.

The waste water treatment facility shown in the figure consists of two process tanks parted by a partition 28. One of the compartments is a non-oxygen tank 25, and the other is an aerobic tank 26. The facility also has a final settling tank 30 for temporally storing the processed water delivered from the aerobic tank 26 to settle sludge therein. Furthermore, the facility includes a pump P1 for feeding the water from the non-oxygen tank 25 to the aerobic tank 26, an aeration apparatus 29 mounted on a bottom of the aerobic tank 26, a screen 24 for preventing the carriers 5 from flowing out into an outlet of the aerobic tank 26, a circulation water pump P2 for returning the processed water treated in the aerobic tank 26 into the non-oxygen tank 25, and a sludge return pump P3 for retuning sludge deposited in the final settling tank 30 into the non-oxygen tank 25. The facility is a waste water treatment facility that is of a carrier added, circulation type and utilizes a nitration or denitration method.

The aerobic tank 26 including the carriers 5 has dimensions in which the ratio of a water flow direction length L to the lateral width B substantially perpendicular to the length is between 1 and 4. Practically, the ratio between 1 and 3 is preferable.

In the non-oxygen tank 25, a mixer 27 stirs the inflow water, which enhances that anaerobic microbes such as a denitration bacteria biologically treats nitric acids and nitrous acids with using organic substances in the waste water as a reducing agent. The treated water is fed into the aerobic tank 26 by the pump P1. The aerobic tank 26 is always aerated by the aeration apparatus 29, which oxidizes to decompose organic substances in the waste water and oxidizes ammonia into nitric acids or nitrous acids by the action of floating microbes and microbes on the carrier.

In the embodiment in FIG. 11, the non-oxygen tank 25 and the aerobic tank 26 are parted by the partition 28, and the water is pumped to the tank 26. Alternatively, there may be provided a mesh screen covering an opening located on a lower part of the partition 28, the mesh having a size for preventing the carriers 5 from passing through. In another alternative example, the partition 28 may have a height over which the water can enter from the non-oxygen tank to the aerobic tank.

The carrier added process tank is not only applied to the circulation type, nitrition or denitration method shown in the FIG. 11 but also to various types of carrier added waste water treatment facilities. For example, the process tank is applied to a waste water treatment facilities. For example, the process tank is applied to a waste water treatment facility including an aerobic process and a non-oxygen process, only an aerobic process, or an anaerobic process and an aerobic process. Moreover, the tank can be applied to a waste water treatment facility used for a carrier added activated sludge process or the like. As discussed above, the carrier is a particulate composed mainly of organic polymer substances or inorganic substances. The carrier is mounted microbes built up thereon or attached thereto. In addition, the carrier may be applied to a process tank having a 5 meter water depth and installed with an air-bubble supply facility at a lower part thereof. The tank may have a deep water depth of around 10 meters and have an air-bubble supply facility positioned around a 5 meter water depth. The process tank may apply an all-over-tank aeration method or a swirl flow method.

### (A specified example of embodiment 7)

Next, an experiment result will be discussed to refer to a process tank used in a waste water treatment facility according to the invention, particularly to its advantages.

Table 2 shows a data that was obtained from waste water purification processes, in which the ratio of the length L to the lateral width B of the process tank was varied sequentially to be 1, 2, 3, 4, and 6. The data relates to the treated water quality and the distribution of microbe-mounted-carriers in the process tank. The processes used a raw water shown in Table 1.

**Table 1**

| Raw Waste Water Quality | |
|---|---|
| | concentration ratio (mg/L) |
| BOD | 100 |
| T-N | 30 |
| NH₄-N | 25 |
| note : BOD: biochemical oxygen demand T-N: nitrogen concentration ratio NH₄-N: ammoniac nitrogen concentration ratio | |

In Table 2, regarding treated water quality, there are shown concentration ratios of BOD and T-N in the water. Furthermore, regarding distribution states of microbe-mounted-carriers, there are shown numeric values that are obtained by dividing an outflow side carrier concentration ratio by an inflow side carrier concentration ratio with regard to each process tank.

**Table 2**

| Treated water quality and outflow side carrier concentration ratio/inflow side carrier concentration ratio, which are corresponding to the ratio of the length L to the lateral width B of a process tank | | | | | |
|---|---|---|---|---|---|
| Process tank aspect ratio | 1 | 2 | 3 | 4 | 6 |
| processed water BOD (mg/L) | 4.8 | 4.8 | 4.8 | 5.0 | 15 |
| processed water T-N (mg/L) | 15.0 | 15.0 | 15.0 | 15.5 | 21.0 |
| processed water NH₄-N (mg/L) | 0.1 | 0.1 | 0.1 | 0.1 | 3.0 |
| outflow side carrier concentration ratio/inflow side carrier concentration ratio | 1.1 | 1.1 | 1.1 | 1.2 | 1.7 |

The data in Table 2 shows that the aspect ratio of the process tank not greater than 4 (four) achieves a better treatment and a sufficient distribution of microbe-mounted-carriers. Particularly, the ratios between 1 and 3 are preferable in treated water quality as compared with the ratio 4.

### (Embodiment 8)

Next, referring to another drawing, a waste water treatment method and a facility thereof of an embodiment according to the invention will be discussed.

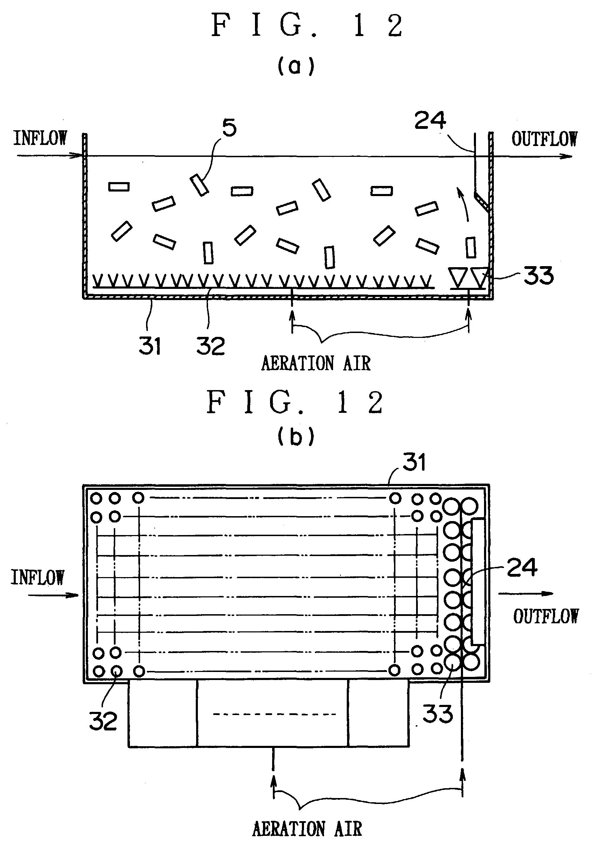

FIG. 12 shows major elements of a waste water treatment facility of an embodiment according to the invention, FIG. 12 (a) being a schematic side view thereof, FIG. 12 (b) a plan view. The waste water treatment facility has an aeration tank 31 into which a waste water flows from an upper position of the tank 31. The aeration tank 31 includes an air-bubble supply apparatus 32 at a lower position thereof. Moreover, there is installed another air bubble generating apparatus 33 below a carrier separating screen 24. The apparatus 33 operates both for aeration and air-bubble supply. The aeration tank 31 contains added microbe-mounted-carriers 5. The apparatus 33 produces larger air bubbles into the water than those of the apparatus 32. The microbe-attached carrier 5 is a particulate consisting mainly of an organic polymer substance or an inorganic substance. The microbes are built up on or attached to the carrier that may be, for example, a plastic piece or a flexible one made of sponge or the like.

The air bubble generating apparatus 33 may be located just under or close to the carrier separating screen 24. The apparatus 33 may be positioned within 1/3 of the tank depth from the tank bottom, preferably within 2 meters. In addition, the apparatus 33 may have a width equal to the tank breadth and is located on the tank bottom for generating a circulation flow in the tank. The air supply rate of the air bubble generating apparatus 33 is determined so as to distribute the carriers corresponding to the configuration of the tank 31. Normally, a 1.5 times of the air supply rate per a unit length or a unit area relative to that of the water treatment air-bubble supply apparatus 32 may be sufficient for the distribution. The presence of the air bubble generating apparatus 33 defines a comparatively large air bubble curtain in front of the screen 24, which prevents the carriers 5 from unevenly distributing particularly in the outflow side of the tank over the air bubble curtain. This prevents the screen 24 from clogging due to the carriers 5. Moreover, when the air bubble generating apparatus 33 is mounted just under the screen 24, the generated flow scratches off the carriers that tend to build up on the screen 24.

In the aeration tank 31, as shown in FIG. 12(b), the air bubble generating apparatus 33 is only just under the screen 24, and over almost all the other part of the tank is arranged the air-bubble supply apparatus 32. The air-bubble supply apparatus 32 and the air bubble generating apparatus 33 are fed with air by mean of a blower or the like. A single blower may be applied for both the air-bubble supply apparatus 32 and the air bubble generating apparatus 33, or a respective blower may be applied to the apparatuses 32 and 33. The air bubble generating apparatus 33 may have such a configuration as a plate, a disc, or a pipe, and the apparatus may be made of ceramic, resin, steel, rubber, or a compound thereof. In the apparatus 33, for example, a plurality of opening ports having a diameter approximately between 1 and 5 mm are formed longitudinally in conduit pipes of the apparatus. Meanwhile, the air-bubble supply apparatus 32 has a plurality of opening ports having a diameter around 1 mm. When the air bubble generating apparatus 33 has conduits formed with approximately 1 mm diameter openings, plural conduits having the ports are disposed in parallel and dose to one another. This can adjust air supply rate of the apparatus 33 relative to that of the air-bubble supply apparatus 32. That is, the air supply rate adjustment per a unit length or per a unit area of the air bubble generating apparatus 33 generates a swirl flow in the tank.

Meanwhile, the air bubble generating apparatus operates continuously or intermittently. In the intermittent operation, the stopping time is determined to be about an hour, and the running time is about ten minutes, the stopping and running being repeated. Such operation allows an effective distribution of microbe-mounted-carriers. Moreover, since the inflow water rate of the aeration tank 31 varies with time, the air bubble generating apparatus 33 operates continuously only at a larger water inflow rate, and intermittently at a smaller water inflow rate.

### (Embodiment 9)

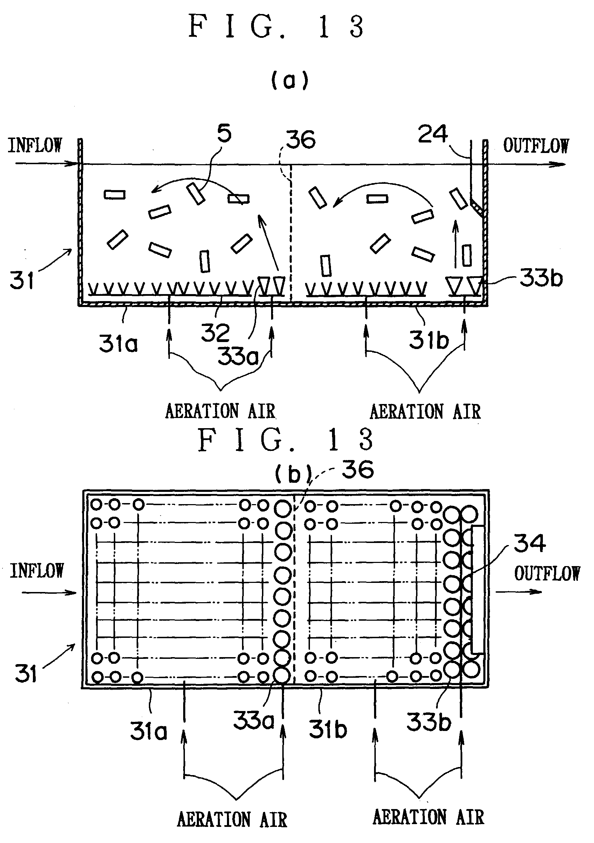

FIG. 13 is a schematic view showing another embodiment of a waste water treatment method and a facility of the same according to the invention; FIG. 13(a) being a side view; FIG. 13(b) a plan view. When an aeration tank 31 has a significantly long length, the tank 31 is parted by a carrier separating screen 36. The parted tank 31a, 31b are added with microbe-mounted-carriers for water purification process. There is disposed an air bubble generating apparatus 33b just under the carrier separating screen 24, and an air bubble generating apparatus 33a is located in the inflow side of the carrier separating screen 36. Alternatively, the tank 31 has an intermediate partition wall that is formed with a partial opening covered by a carrier separating screen for preventing microbe-mounted-carriers 5 from flowing therethrough. Air bubble generating apparatuses 33a, 33b are disposed just under or close respectively to the carrier separating screen 24 or 36 as in the foregoing embodiment 8.

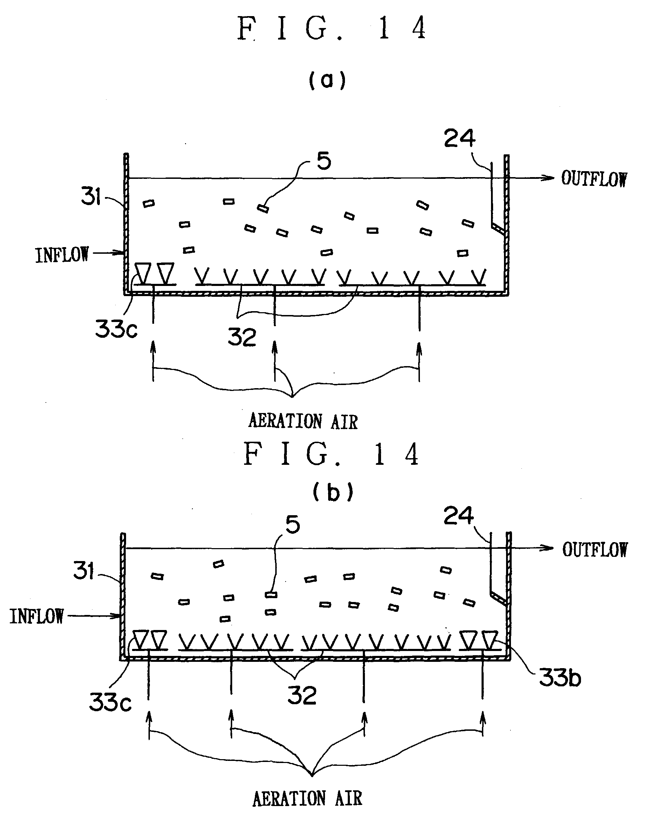

FIG. 14 is a schematic side view of another embodiment according to the invention.

In FIG. 14(a), an aeration tank has an air-bubble supply apparatus 32 and an air bubble generating apparatus 33c at the bottom side of thereof. The tank 31 also has an inflow conduit at an lower part of thereof and a screen 24 at outflow part thereof. The tank 31 contains microbe-mounted-carriers 5 mixed in an inflow water. In this arrangement, air bubbles generated from the apparatus 33c change a waste water flown from the conduit in its flow direction.

FIG. 14(b) shows another aeration tank that has an air-bubble supply apparatus 32 and an air bubble generating apparatus 33c at the bottom part thereof, and an inflow conduit is disposed such that an inflow water flows from a lower part of the tank 31. In addition, there is disposed an air bubble generating apparatus 33b just under the screen 24.

In the embodiments shown in FIG. 14, there is disposed an air bubble generating apparatus 33c at the inflow side of the tank. The apparatus 33c generates comparatively large air bubbles, which decreases the speed of the inflow water, preventing a short circulation of the water. This prevents microbe-mounted-carriers from unevenly distributing in the tank. Provision of the comparatively large air bubble generating apparatus 33b at the outflow part as shown in FIG. 14(b) produces effectively a swirl flow in the tank.

Next, operation of the air bubble generating apparatuses 33a to 33c associated with the embodiments shown in FIGS. 13 and 14 will be discussed. The air bubble generating apparatuses 33a, 33b operate continuously and intermittently. In the intermittent operation, 10 (ten) minute operations at one-hour intervals allow an effective distribution of the carriers. However, in the embodiments shown in FIG. 14, it is preferable to operate continuously the air bubble generating apparatus 33c for preventing a short circulation in the tank. Meanwhile, the air bubble generating apparatus 33b may operate continuously or intermittently. Also in the air bubble generating apparatuses 33a to 33c, since the waste water inflow rate varies with time, the apparatuses operate continuously only at a larger inflow rate, and intermittently at a smaller inflow rate.

### (An Experiment of Embodiment 9)

Next, based on an experiment, an effective biologically purification process of the waste water treatment facility according to he invention will be discussed.

This experiment used a raw water shown in Table 3. A couple of comparative experiments were carried out, one of which operated the air bubble generating apparatus for aeration and the other of which did not use the air bubble generating apparatus. In Table 4, "presence" denotes application of the air bubble generating apparatus, while "absence" denotes no application of the apparatus. Table 4 shows water treatment results of each case "presence" or "absence", which include treated water qualities and carrier distributions in the aeration tank. The treated water qualities are shown by BOD and T - N concentration in the water. The degree of distribution is shown by dividing an outflow side carrier concentration ratio by an inflow side carrier concentration ratio of carriers in the aeration tank.

**Table 3**

| Raw Waste Water Quality | |
|---|---|
| | concentration ratio (mg/L) |
| BOD | 100 |
| T-N | 30 |
| NH₄-N | 25 |
| note : BOD: biochemical oxygen demand T-N: nitrogen concentration ratio NH₄-N: ammoniac nitrogen concentration ratio | |

**Table 4**

| Treated water quality and comparative ratio relative to presence or absence of air bubble generating apparatus (outflow side carrier concentration ratio/ inflow side carrier concentration ratio) | | |
|---|---|---|
| air bubble generating apparatus | presence | absence |
| processed water BOD (mg/L) | 5 | 12 |
| processed water T-N (mg/L) | 15 | 23 |
| processed water NH₄-N (mg/L) | 0.1 | 2.9 |
| outflow side carrier concentration ratio/inflow side carrier concentration ratio | 1.1 | 1.8 |

It is noted apparently from the experiment result shown in Table 4 that the provision of the air bubble generating apparatus in the aeration tank of the treatment facility according to the invention allows a reduction in the resulted numerals both of BOD and T-N. Concerning an outflow side carrier concentration ratio/an inflow side carrier concentration ratio, the ratio value is 1.1 in the "present" case, while the value is 1.8 in the "absence" case. The comparative data shows that the provision of a comparatively large air bubble generating apparatus in a waste water treatment facility can distribute sufficiently microbe-mounted-carriers in the tank for a good biological purification process.

The microbe-mounted-carriers used in the tank are particles, as discussed above, consisting mainly of an organic polymer substance or an inorganic substance. The carrier has microbes attached thereto or normally built up thereon. The arrangement of the air-bubble supply apparatuses may be applied to an aeration tank having an approximately 5 m depth and aerated all over the tank, and may be applied to a deep process tank having an approximately 10 m depth. The deep tank may have an air-bubble supply apparatus positioned around a 5 m depth so as to generate a swirl flow in the tank.

### (Embodiment 10)

Referring to another drawing, a waste water treatment method and a facility of the same of an embodiment according to the invention will be discussed hereinafter.

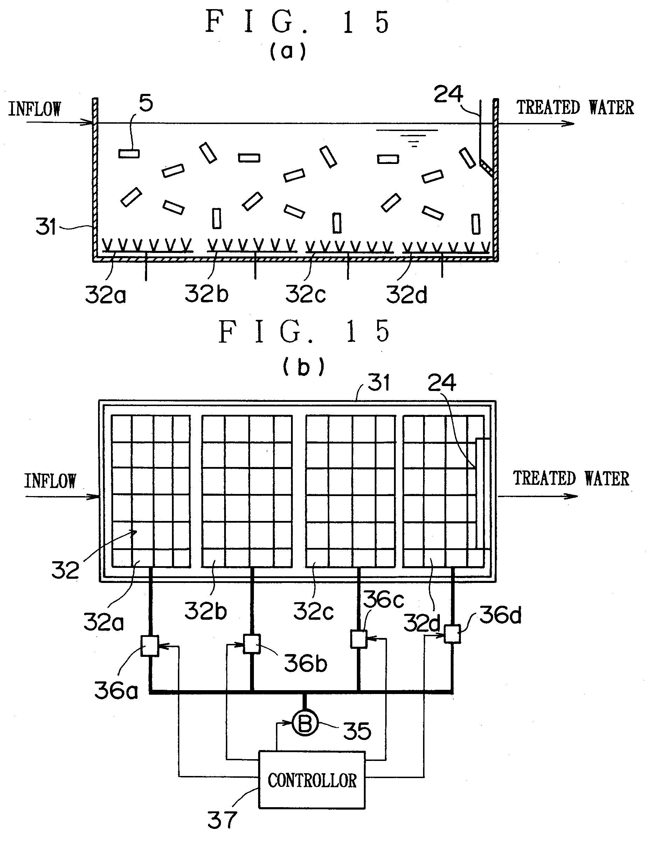

FIG. 15(a) shows the embodiment of the waste water treatment facility, and FIG. 15(b) is a plan view thereof. Designated 31 is an aeration tank that has an air-bubble supply apparatus 32 at a bottom part thereof. The apparatus 32 consists of air-bubble supply units 32a to 32d. In the outflow side of the aeration tank 31 there is disposed a carrier separating screen 33. The aeration tank 31 contains a inflow water provided with carriers 5 (called as microbe-mounted-carriers hereinafter) that distribute in the water. Each of air-bubble supply units 32a to 32d has a substantially equal air-bubble supply capacity and connected to an blower (an air supply fan) 35 by way of an air supply conduit. Each conduit is provided with a flow adjustment device 36a to 36d such as a valve. The blower 35 can be adjusted in air flow rate by a controller 37. The flow adjustment devices 36a to 36d may be manually actuated to adjust the air supply rate of each unit.

The flow adjustment devices 36a to 36d and the blower 35 are controlled by signals supplied from the controller 37 so as to adjust the air supply rate of each supply unit. For example, the controller 37 supply a signal to operate the flow adjustment devices 36a to 36d to adjust the open extent thereof such that the outflow side air supply is larger than that of the inflow side. This adjustment of the air supply rate of each air-bubble supply units 32a to 32d can generate a swirl flow in the aeration tank 31.

The air supply rates are adjusted such that the ratio of the most downstream apparatus to the most upstream one in the aeration tank 31 becomes a value between 1.1 and 3.0, preferably between 1.5 and 2.0. Meanwhile, Where the ratio is not larger than 1.1, an oxygen concentration ratio in the water becomes undesirably small, causing a reduction in aeration effect. Where the ratio is not less than 3.0, the oxygen is not sufficiently absorbed. Thus selected ratio can generate a swirl flow in the water contained in the aeration tank, which provides a good aeration effect and sufficiently distributes microbe-mounted-carriers 5 in the water. That is, the swirl flow generated in the tank water effectively distributes the carriers 5 widely in the water, achieving an effective biological waste water purification.

### (Embodiment 11)

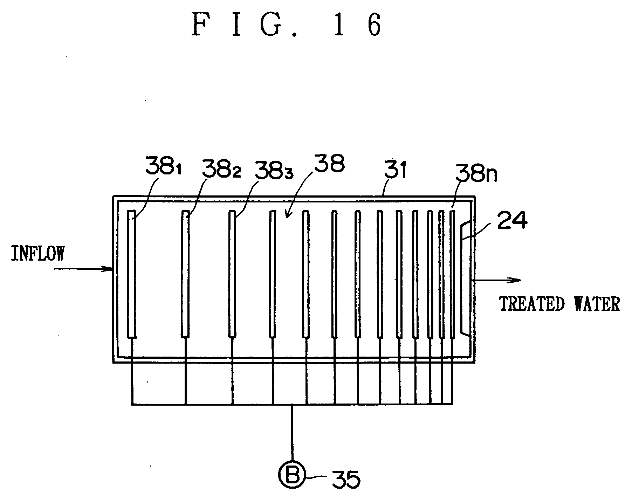

FIG. 16 is a plan view showing an embodiment of a waste water treatment facility according to the invention.

Designated 31 is an aeration tank having an air-bubble supply apparatus 38 located at a bottom part of the tank. The apparatus 38 consists of a plurality of air-bubble supply units 38₁ to 38n. The air-bubble supply apparatuses 38₁ to 38n are disposed with a spaced therebetween, the spaces being gradually smaller toward the outflow side of the tank. Each air-bubble supply apparatus 38₁ to 38n connects to a blower 35 by way of air supply conduits. The blower 35 supplies air at a constant flow rate to the air-bubble supply apparatus 38, and each of air-bubble supply units 38₁ to 38n discharges air at an equal rate into the tank water.

The air-bubble supply units 38₁ to 38n are arranged such that per-area air discharge rates increase gradually toward the outflow side. This generates a swirl flow in the waste water contained in the tank 31, distributing microbe-mounted-carriers 5 in the water for achieving an effective biological purification. Each air-bubble supply unit 38₁ to 38n may be a simple steel pipe having air-bubble supply ports or a steel pipe with nozzles.

In this embodiment, the intervals of the air-bubble supply units determine the corresponding per-area air supply rates. The air supply rates, as in the embodiment of FIG. 15, are adjusted such that the ratio of the most downstream apparatus to the most upstream one in the tank becomes a value between 1.1 and 3.0, preferably between 1.5 and 2.0. The intervals of the air-bubble supply units are adjusted to achieve the foregoing ratio of the air supply rates per-area. Such ratio generates a swirl flow in the tank 31 to effectively distribute the carriers 5 in the tank. In addition, differing from the embodiment of FIG. 15, this embodiment supplies air at a constant flow rate into the air-bubble supply apparatus 38 to generate a swirl flow. Hence, this embodiment advantageously requires no flow rate adjustment device such as the devices 36a to 36d.

The intervals of the air-bubble supply units may vary regularly or irregularly. However, the air supply rates are adjusted such that the ratio of the most downstream apparatus to the most upstream one in the tank becomes a value between 1.1 and 3.0, as described in the embodiment of FIG. 15.

### (Embodiment 12)

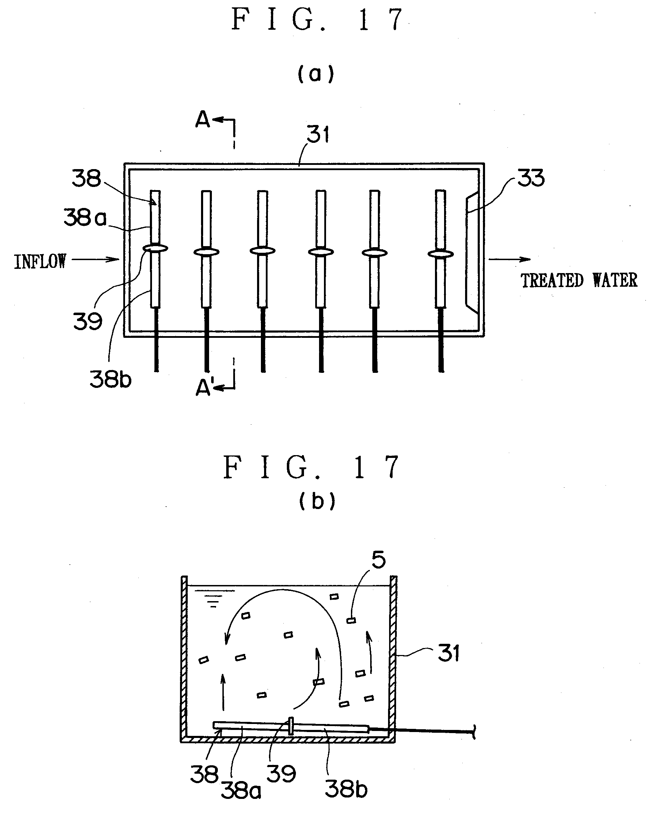

FIG. 17 is another embodiment of a waste water treatment facility according to the invention; FIG. 17(a) is a plan view thereof; and FIG. 17(b) is a sectional view taken along A-A' in FIG. 17(a).

Designated 31 is an aeration tank, in which there are disposed a plurality of air-bubble supply units 38 close to the tank bottom. Each air-bubble supply unit 38 has an orifice adjustment device 39 substantially in the middle thereof. The orifice device 39 may have a constant through-opening, or may have an opening adjustable to adjust the air flow rate for varying air supply rates between the fore end one 38a and the aft end one 38b of the air-bubble supply units 38. The orifice adjustment device 39 may be activated manually, or may have an automatic mechanism for adjusting the air passage sectional diameter.

The orifice adjustment devices 39 are located in air supply pipes of the air-bubble supply apparatus 38. The devices 39 can be adjusted to differ an upstream one from a downstream one in air supply rate, which generates a swirl flow perpendicular to the downstream direction of an inflow water of the aeration tank 31. In the aeration tank 31 added with the carriers 5, there are disposed air-bubble supply units 38 having the orifice adjustment device 39. The fore end one unit 38a is smaller in air supply rate and the aft end one 38b is larger in the rate, which generates a swirl flow against the inflow water current, enabling an effective distribution of the carriers 5. The ratio of the fore end unit 38a to the aft end unit 38b in air supply rate is adjusted to be between 1.1 and 3.0, preferably between 1.5 and 2.0.

When the orifice adjustment device 39 is activated based on electrical signals, the air passing orifice diameter can vary at predetermined periods, achieving various flows in the tank.

Though the followings are not shown in the figure, it is apparent that the aeration tank in the embodiment of FIG. 17 may have an air-bubble supply apparatus that applies partially the one of FIG. 15 or 16 for generating various swirl flows in the aeration tank 31 to effectively distribute microbe-mounted-carriers for a biological purification process of a waste water.

When the air supply rates of the upstream units are larger than those of the downstream ones in the aeration tank, there is provided a swirl flow that is opposite in direction to the flow of the foregoing embodiment. In this case, a raw waste water fed from an upper portion of the aeration tank tends to flow mainly around the water surface of the aeration tank to reach the outflow part. This causes an undesirable short circulation flow. For preventing such a short circulation, a larger air supply rate of the downstream of the aeration tank is applied to draw the waste water into a bottom part of the tank so as to effectively distribute the carriers. Meanwhile, when a raw waste water is fed from a lower part of the aeration tank, it is preferable that the aeration flow rate of the upstream side is larger than that of the downstream side of the tank.

The microbe-mounted-carriers used in the foregoing embodiment are particles, as discussed above, consisting mainly of an organic polymer substance or an inorganic substance. The carrier has microbes attached or normally built up thereon. The carrier may be, for example, a plastic piece or a flexible one made of such a material as sponge. The arrangement of the air-bubble supply apparatuses located in a lower part of a tank may be applied to an aeration tank that is aerated all over the tank, and may be applied to a deep process tank having a 10 m depth so as to generate a swirl flow in the tank.

Next, an experimental result of a waste water treatment facility based on an embodiment of the invention will be discussed as referring to the associated comparative experiments. This experiment applied the waste water treatment facility shown in FIG. 15 and a raw water having the quality shown in Table 5. The air-bubble supply units 32a to 32d are varied in air supply rate to prove an effectiveness of the invention. In an air-bubble supply condition 1, the ratio of air supply rates of the air-bubble supply units 32a to 32d was determined to be 1:1:1.1:1.5. In an air-bubble supply condition 2, the ratio was determined to be 1:1:1:1. Table 6 shows the results of the comparative experiments, which includes the treated water quality and the carrier distribution state that is shown by the ratio of an outflow side carrier concentration ratio to an inflow side carrier concentration ratio.

**Table 5**

| Raw Waste Water Quality | |
|---|---|
| | concentration ratio (mg/L) |
| BOD | 100 |
| T-N | 30 |
| NH₄-N | 25 |
| note : BOD: biochemical oxygen demand T-N: nitrogen concentration ratio NH₄-N: ammoniac nitrogen concentration ratio | |

**Table 6**

| Treated water quality, and outflow side carrier concentration ratio/inflow side carrier concentration ratio under each condition | | |
|---|---|---|
| condition | 1 | 2 |
| processed water BOD (mg/L) | 5 | 22 |
| processed water T-N (mg/L) | 15 | 25 |
| processed water NH₄-N (mg/L) | 0.1 | 2.5 |
| outflow side carrier concentration ratio/inflow side carrier concentration ratio | 1.1 | 1.9 |

Table 6 shows apparently that the condition 1 having an increased air supply rate in the downstream side provides a better treatment to sufficiently distribute carriers. Meanwhile, the condition 2 having an equal air supply rate provides a reduction in treatment performance and causes an uneven carrier distribution. Thus, in a treatment facility including an aerobic tank that is provided with carriers and that is aerated all over the tank from the tank bottom, the variation of air-bubble supply units in air supply rate toward downstream of the tank enables a sufficient carrier distribution in the aeration tank to achieve a good purification process.

### Advantages of the invention in industrial use

The invention has the following advantages in industrial use.
(1) Carrier separating screen unit
   (1-1) Provision of a stream guide member close to a screen installed in an aeration tank can prevent a flow rate decrease in the ascending current generated by air bubbles close to the screen face. In addition, other streams in the aeration tank give no adverse effect to the ascending current within the flow passage defined between the stream guide member and the screen. Thus, a relatively small air supply rate can prevent effectively carriers or the like from building up on the screen.
   (1-2) Extension of the guide member lower end close to an aeration apparatus can guides more air bubbles from the aeration apparatus into the flow passage, allowing a lager ascending current speed along the screen. In addition, this enables a reduction in air supply rate of another air-bubble supply apparatus installed in the tank, or may not require another air-bubble supply apparatus.
(2) Air-bubble supply method and apparatus for carrier separating screen
   (2-1) The invention can provide an air-bubble supply method and an apparatus thereof for positively preventing clogging of a carrier separating screen.
   (2-2) Provision of the air-bubble supply apparatus for the carrier separating screen prevents dogging of the screen, simplifying the apparatus in maintenance. Moreover, this allows a smaller screen, significantly decreasing a construction cost of the waste water treatment facility.
(3) Waste water treatment method and an apparatus thereof
   (3-1) In a waste water treatment using a process tank and provided with microbe-mounted-carriers, the ratio of the tank downstream direction length to the width of the tank is determined to be not more than 4, preferably between 1 and 3, allowing a sufficient distribution of the carriers. This enables a lower cost of the apparatus in construction, and the apparatus is easy in maintenance.
   (3-2) Even in an existing facility having a process tank in which the ratio of the length to the width of the tank is more than 4, a screen partition, which does not allow carriers to pass through, can be provided so as to acheive the preferable dimension ratio of the process tank. Hence, such existing long process tanks can sufficiently distribute the carriers.
   (3-3) The invention can sufficiently distribute microbe-mounted-carriers in the aeration tank, making an effective use of the aeration tank capacity and all the carriers. Thus, a carrier separating screen installed at a downstream side of the tank is not built up with carriers, which allows a stable carrier separation at the screen, reducing a maintenance cost such as screen cleaning for preventing clogging of the screen.
   (3-4) According to the invention, an air bubble generating apparatus generates comparatively large air bubbles, which defines an air bubble curtain close to the outflow part of the tank. This also generates a swirl flow in the tank to distribute microbe-mounted-carriers for waste water treatment. The air bubble generating apparatus is low in installation and operation cost, decreasing the total cost of the waste water treatment facility, particularly in construction cost.
   (3-5) According to the invention, microbe-mounted-carriers are sufficiently distributed in the aeration tank, making an effective use of all the carriers, and carriers do not build up on the carrier separating screen installed in a downstream side of the aeration tank. Hence, the carrier separating screen separates carriers stably, reducing a maintenance cost such as screen cleaning for preventing clogging of the screen.
   (3-6) An air bubble generating apparatus located in a downstream side of the aeration tank operates continuously but operates intermittently when the waste water inflow rate into the aeration tank is smaller. This allows a sufficient distribution of carriers, reducing operation cost thereof.
   (3-7) An aeration tank containing a carrier added water is provided with a plurality of air-bubble supply units which are unequally arranged between the upstream side and the downstream side of the tank. This unequal arrangement generates a swirl flow in the tank to sufficiently distribute the carries, preventing the carriers from unevenly distributing toward the downstream of the tank. The air supply rate of the air-bubble supply units may be adjusted to be unequal between left and right sides relative to the downstream direction of the tank, which generates a swirl flow in the tank to prevent the carriers from unevenly distributing between the left and right sides of the tank.
   (3-8) Without an extra element such as a baffle plate in the aeration tank, air-bubble supply units for reducing BOD and for removing nitrogen/the like are unevenly mounted in the aeration tank. This distributes all the carriers widely in the tank to advantageously achieve an effective biological waste water purification.
   (3-9) The air-bubble supply apparatus can prevent a short circulation flow in the waste water contained in the aeration tank to advantageously allow an effective biological purification of waste water.
   (3-10) The air-bubble supply apparatus also prevents the carriers from concentrating around the carrier separating screen, so that the screen can stably separate the carriers. This decreases such a maintenance work as screen cleaning for preventing clogging of the screen.

## Claims

1. A carrier separating screen unit for separating microbe-mounted-carriers that are used in a biological purification process of organic and inorganic substances in a waste water, characterized in that a stream guide member is provided close to and spaced from a carrier separating screen.

2. A carrier separating screen unit as set forth in claim 1, characterized in that said screen is mounted in an aeration tank and said stream guide member has a lower end extended near an aeration apparatus provided in said aeration tank.

3. A carrier separating screen unit as set forth in claim 1 or 2, characterized in that an air-bubble supply apparatus is provided under and close to said screen.

4. An air-bubble supply method for a carrier separating screen, characterized in supplying air-bubbles in such a way that an air supply rate is varied with time for separating microbe-mounted-carriers by a carrier separating screen.

5. An air-bubble supply method for a carrier separating screen as set forth in claim 4, characterized in that air-bubbles are supplied from more than one positions close to said screen.

6. An air-bubble supply apparatus of a carrier separating screen for separating microbe-mounted-carriers that are used in a biological purification process of organic and inorganic substances in a waste water, characterized in having an air-bubble supply header located close to said screen and a control means for controlling an air supply rate of said header with time.

7. An air-bubble supply apparatus as set forth in claim 6, wherein said apparatus is further characterized in having more than one air-bubble supply headers close to said screen.

8. A waste water treatment method for purifying biologically a waste water, characterized in that for treating a waste water in a process tank provided with microbe-mounted-carriers, said process tank has a flow direction length and a lateral width substantially perpendicular to the length such that the ratio of the length to the lateral width is between one and four, and the waste water including said carriers in said process tank is stirred by aeration so as to distribute said carriers in the water.

9. A waste water treatment facility for purifying biologically a waste water, characterized in having a process tank for biologically purifying a waste water with microbe-mounted-carriers and with aeration, said process tank having a length and a lateral width substantially perpendicular to the length such that the ratio of the length to the lateral width is between one and four.

10. A waste water treatment facility as set forth in claim 9, wherein said facility is further characterized in having a partition that determines the ratio of the length to the lateral width of said process tank so as to be a predetermined value, the partition being a screen having a mesh to prevent said carriers from flowing out.

11. A waste water treatment method that utilizes a treatment apparatus having an aeration tank provided with microbe-mounted-carriers, wherein the method is characterized in that said aeration tank comprises a process compartment and a plurality of air-bubble supply apparatuses mounted in said process compartment, said air-bubble supply apparatuses varying in air supply rate toward the downstream of said process compartment, which can generate a swirl flow in said process compartment to distribute said carriers in said process compartment for biologically purifying the waste water.

12. A waste water treatment method as set forth in claim 11, wherein said method is further characterized in that the ratio of the most downstream air-bubble supply apparatus to the most upstream one in air supply rate is adjusted to be between 1.1 and 3.0.

13. A waste water treatment method that utilizes a treatment apparatus having an aeration tank provided with microbe-mounted-carriers, characterized in that said aeration tank comprises a process compartment and a plurality of air-bubble supply apparatuses located in said aeration tank, said air-bubble supply apparatuses varying in air supply rate between the left and right sides of said process compartment relative to the water downstream direction, which can generate a swirl flow substantially perpendicular to the downstream direction in said process compartment to distribute said carriers in said process compartment for biologically purifying the waste water.

14. A waste water treatment method as set forth in claim 13, wherein the method is further characterized in that the ratio of the right side to the left side or of the left side to the right side of the aeration tank is adjusted to be between 1.1 and 3.0.

15. A waste water treatment method that utilizes a treatment apparatus having an aeration tank provided with microbe-mounted-carriers, characterized in that said aeration tank includes a process compartment and a plurality of air-bubble supply apparatuses mounted in the process compartment, wherein said air-bubble supply apparatuses vary in installation intervals toward the downstream of said process compartment, and said air-bubble supply apparatuses provide air-bubbles to generate a swirl flow in said process compartment to distribute said carriers in said process compartment for biologically purifying the waste water.

16. A waste water treatment facility that utilizes a treatment apparatus having an aeration tank provided with microbe-mounted-carriers, characterized in that said aeration tank includes a process compartment and a plurality of air-bubble supply apparatuses disposed in said process compartment, and furthermore, said facility has an adjustment means that varies said air-bubble supply apparatuses in air supply rate toward the downstream of said process compartment.

17. A waste water treatment facility that utilizes a treatment apparatus having an aeration tank provided with microbe-mounted-carriers, characterized in that said aeration tank includes a process compartment and a plurality of air-bubble supply apparatuses disposed in said process compartment in a direction substantially perpendicular to the tank downstream direction, and for adjusting the air supply rate between the left and right sides of the aeration tank, said facility has one or more of orifice adjustment devices that are provided in air tubes provided in said air-bubble supply apparatuses.

18. A waste water treatment method that utilizes an aeration tank provided with microbe-mounted- carriers, characterized in that said aeration tank consists of one compartment or a plurality of compartments parted by such a partition as a carrier separating screen; another carrier separating screen is mounted close to an outflow part of said tank, and an air bubble generating apparatus is installed just under or close to the partition, which generates air bubbles in said tank to produce a swirl flow for distributing said carriers in said aeration tank.

19. A waste water treatment method as set forth in claim 18, wherein the method is further characterized in operating continuously or intermittently said air bubble generating apparatus to generate a swirl flow in said aeration tank so as to distribute said carriers in said tank.

20. A waste water treatment facility that utilizes an aeration tank provided with microbe-mounted-carriers, characterized in that said tank consists of one compartment or a plurality of compartments parted by such a partition as a carrier separating screen; an air-bubble supply apparatus is mounted in said compartment; another carrier separating screen is mounted close to an outflow part of said tank; and an air bubble generating apparatus is installed just under or close to said another carrier separating screen.
